# EUROPÄISCHE PATENTSCHRIFT

(11) **EP 1 656 231 B1**
(45) Veröffentlichungstag und Bekanntmachung des Hinweises auf die Patenterteilung: **23.04.2008**
(21) Anmeldenummer: 04763334.2
(22) Anmeldetag: 19.07.2004
(51) Int. Cl.: B23K 20/10, B23K 20/12, B29C 65/06, B29C 65/08

(54) **ORBITAL-REIBSCHWEISSVERFAHREN UND VORRICHTUNG ZUR DURCHFÜHRUNG DES VERFAHRENS**
ORBITAL FRICTION WELDING METHOD AND DEVICE FOR CARRYING OUT SAID METHOD
PROCEDE DE SOUDAGE PAR FRICTION ORBITAL ET DISPOSITIF DESTINE A LA MISE EN OEUVRE DE CE PROCEDE

(30) Priorität: 24.07.2003 DE 10333783
(43) Veröffentlichungstag der Anmeldung: 17.05.2006
(73) Patentinhaber: Multi Orbital Systems GmbH, 95119 Naila (DE)
(72) Erfinder: CRASSER, Leonhard, 95119 Naila (DE)
(74) Vertreter: Fleuchaus, Michael A.
(86) Internationale Anmeldenummer: PCT/EP2004/008049
(87) Internationale Veröffentlichungsnummer: WO 2005/009663

(56) Entgegenhaltungen:
- EP-A- 0 504 494
- EP-A- 0 707 919
- US-A- 3 088 343
- US-A- 6 091 215
- US-A1- 2002 070 259

## Beschreibung

Die Erfindung betrifft ein Orbital-Reibschweißverfahren zum Verschweißen von Werkstücken , wobei die Werkstücke während der Einleitung der Schwingungsenergie in die Fügeebene axial gegeneinander gedrückt werden. Ferner betrifft die Erfindung eine Vorrichtung zur Durchführung des Verfahrens, bei der eine zirkulare Bewegungsenergie zum Verschweißen von den unter Achsdruck stehenden Werkstücken mit einem beliebigen Querschnitt in der Fügeebene (F) in die Fügeebene einleitbar ist,

Reibschweißverfahren als solche sind an sich bekannt, wobei durch relative Bewegung und gleichzeitigem Druck Reibung erzeugt wird, um die nötige Schmelzenergie an den zu verschweißenden Flächen zu erzeugen.

Zur Herstellung von aus Profilstäben aufgebauten Fenster- und Türrahmen ist ein Mehrkopf-Reibschweißverfahren durch die DE 19938100 A bekannt. Zum gleichzeitigen Verschweißen werden die einzelnen Profilstäbe eines Rahmens beiderseits benachbart zu den Fügeebenen in seitlich angesetzten Reibschweißköpfen festgespannt und mit deren Hilfe in Schwingung versetzt, wobei die Fügeflächen gleichzeitig gegeneinander gedrückt werden. Ein derartiger Einsatz der Reibschweißköpfe ermöglicht eine erhebliche Verkürzung der Prozeßzeit, jedoch können nur winkelig zueinander angeordnete und verhältnismäßig kurze Stäbe miteinander verschweißt werden, wobei die Reibachse nicht im Flächenschwerpunkt liegt.

Der Erfindung liegt deshalb die Aufgabe zugrunde Maßnahmen zu finden, um verhältnismäßig große und lange Werkstücke verschweißen zu können, wobei auch große Energiemengen einfach in die Fügeebene einleitbar sein sollen, um auch große Materialmengen in der Fügeebene auf Fügetemperatur zu bringen.

Diese Aufgabe wird für das eingangs erwähnte Orbital-Reibschweißverfahren erfindungsgemäß dadurch gelöst, daß zumindest auf einer Seite der Fügeebene (F) n>1 Reibschweißköpfe an zumindest einer Orbitalscheibe in einer Orbitalebene im Bereich der Werkstücke derart angebracht werden, daß die Schwingköpfe der Reibschweißköpfe ortsfest mit der Orbitalscheibe verbunden werden, und daß die jeweils einer Seite zugewandten n>1 Reibschweißköpfe mit einer gleichen Reibfrequenz und gleichen Amplitude sowie einer gleichen vorgegebenen Phasenlage in Schwingung versetzt werden.

Für ein derartiges Verfahren ist ferner vorgesehen, daß der Vorschub bzw. der Fügedruck der für den Energieeintrag benötigten n>1 Reibschweißköpfe über n>1 Vorschubachsen derart erfolgt, daß die sich durch Überlagerung ergebende virtuelle Gesamtschubachse bei kraftgesteuerter Zustellung durch den Bereich des Fügeflächenschwerpunktes verläuft.

Damit die kinematischen Verhältnisse optimiert werden, ist vorgesehen daß die n>1 Reibschweißköpfe derart angeordnet werden, daß die Reibachsen in der Summe mit ihren virtuellen Gesamtreibachsen durch den Gesamtmassenschwerpunkt aller schwingenden Massen, d.h. Exzenterwelle und Reibplatte der Reibschweißköpfe sowie Reibscheiben, Werkstückaufnahme und Werkstück verläuft.

Zur Vergrößerung der Menge der einleitbaren Schwingungsenergie sieht das Verfahren ferner vor, daß Schwingköpfe von n>1 Reibschweißköpfe auf beiden Seiten der Fügeebene (F) jeweils an Orbitalscheiben ortsfest an Reibscheiben angebracht werden, und daß die n>1 Reibschweißköpfe auf der einen Seite der Fügeebene (F) mit einer vorgebbaren Phasenlage gegenüber den n>1 Reibschweißköpfen auf der anderen Seite der Fügeebene in Schwingung versetzt werden.

Zum Erzeugen des während dem Einleiten der Schwingungsenergie in die Fügeebene einzuleitenden Druckes führen Vorschubaggregate die Werkstücke in der Fügeebene in Axialrichtung weg-zeitgesteuert zusammen. Daraus ergibt sich der Vorteil, daß nicht planparallel aneinander anliegende Fügeflächen bis zur Planlage abgetragen und vollflächig verschweißt werden.

Für eine Orbital-Reibschweißvorrichtung zur Durchführung des Verfahrens, wobei eine zirkulare Bewegungsenergie zum Verschweißen von den unter Achsdruck stehenden Werkstücken mit einem beliebigen Querschnitt in der Fügeebene (F) in die Fügeebene einleitbar ist, ist erfindungsgemäß vorgesehen, daß die Schwingköpfe von n>1 Reibschweißköpfe in zumindest einer Orbitalebene um die zu verschweißenden Werkstücke herum ortsfest an der zumindest einen Orbitalscheibe derart angeordnet sind, daß die sich durch Überlagerung der n>1 Reibachsen der einzelnen Reibschweißköpfe ergebende virtuelle Gesamt-Orbitalreibachse durch den Bereich des Massenschwerpunktes (22) verläuft, und daß die n>1 Reibschweißköpfe mit gleicher Reibfrequenz und gleicher Amplitude sowie einer vorgebbaren Phasenlage schwingen.

Durch die Anordnung einer Mehrzahl von Reibschweißköpfen in einer Orbitalebene um die zu verschweißenden Werkstücke herum ergibt sich der Vorteil, daß durch Erhöhung der Anzahl der Reibschweißköpfe beliebig hohe Energiemengen zugeführt werden können, womit die Verschweißung von Materialwerkstücken, wie z. B. langen dickwandigen Rohren bzw. langen Profilstangen oder Werkstücken mit einer sehr großen Quererstreckung mit geringem Zeitaufwand möglich ist.

Um sicherzustellen, daß alle Bereiche der Fügefläche mit gleicher Energie beaufschlagt werden sieht die Erfindung vor, daß bei Kraftsteuerung alle Vorschubachsen zur Herstellung der Flächensymmetrie bezüglich des Fügeflächenschwerpunktes gleichen Abstand ihrer Vorschubachsen vom Fügeflächenschwerpunkt in der Fügeebene bei gleichzeitiger winkelsymmetrischer Anordnung haben, und daß das Produkt aus Abstand der einzelnen Vorschubachsen vom Fügeflächenschwerpunkt und der jeweiligen Axialdruckkraft (P) in der Gesamt-Orbitalreibachse für alle Vorschubachsen konstant ist.

Für Werkstücke, die im Querschnitt keinen symmetrischen Aufbau haben oder wenn dies konstruktiv notwendig ist, ist erfindungsgemäß vorgesehen, daß alle Vorschubachsen unterschiedliche Abstände vom Fügeflächenschwerpunkt haben, daß die Axialkraft (P) der jeweiligen Vorschubachsen unter Berücksichtigung der Winkellage der Vorschubachsen zueinander umgekehrt proportional zu ihrem Abstand vom Fügeflächenschwerpunkt ist, und daß das Produkt aus Abstand der einzelnen Vorschubachsen vom Fügeflächenschwerpunkt und der jeweiligen Axialdruckkraft (P) in der Gesamt-Orbitalreibachse für alle Vorschubachsen konstant ist.

Bei all diesen Reibschweißvorgängen ist ferner vorgesehen, daß beiderseits der Fügeebene (F) eine Mehrzahl von Reibschweißköpfen mit ihren Schwingköpfe an einer in der Orbitalebene angebrachten Orbitalcheibe um die zu verschweißenden Werkstücke herum ortsfest angeordnet sind, und daß alle an der gleichen Orbitalscheibe angeordneten Reibschweißköpfe mit gleicher Frequenz, gleicher Amplitude und gleicher Phasenlage schwingen.

Eine Ausgestaltung der Erfindung sieht auch vor, daß das eine Werkstück von den stirnseitig zu verschweißenden Werkstücken fixiert ist, und daß nur um das andere Werkstück herum n>1 Reibschweißköpfe in einer Orbitalebene fixiert sind, die dieses Werkstück in Reibschwingung versetzen.

Diese Ausgestaltung ist von Vorteil für weniger materialreiche oder aus einem verhältnismäßig leicht fügbaren Material hergestellte Werkstücke, wie z. B. dünnwandigen Kunststoffrohren.

Bei der Anordnung von Reibschweißköpfen in Orbitalebenen beiderseits der Fügeebene wird ein linearer Schubvektor dadurch geschaffen, daß umlaufend n>1 Reibschweißköpfe auf beiden Seiten der Fügeebene (F) der stirnseitig zu verschweißenden Werkstücke fixiert sind, wobei sich die n>1 Reibschweißköpfe auf beiden Seiten der Fügeebene mit einer Schwingung mit gleichlaufender Phase oder gegenlaufender Drehrichtung mit einer stetig wechselnden Phasendifferenz bei vorgegebener Anlaufphase gegenüberstehen. *(Lineare Relativbewegung)*

Eine kreisender Schubvektor in der Fügeebene ergibt sich dadurch, daß die auf der einen Seite der Fügeebene fixierten n>1 Reibschweißköpfe gegenüber den auf der anderen Seite der Fügeebene angeordneten n>1 Reibschweißköpfe mit einer gegenlaufenden Phase oder gleichlaufender Drehrichtung mit einer vorgegebenen Phasendifferenz schwingen. *(Kreisende Relativbewegung)*

Eine Anpassung der in die Fügeebene einzuleitenden Energiemenge kann durch die Einstellung der Phasendifferenz zwischen den Reibschweißköpfen einer Orbitalebene gegenüber der anderen Orbitalebene auf der anderen Seite der Fügeebene erfolgen, wobei eine Phasendifferenz von 180° eine maximale Relativbewegung in der Fügeebene, daß heißt eine maximale Amplitude der Reibschwingung erzeugt.

Die Erfindung ermöglicht auch das Verschweißen von einer Strebe, welche T-förmig auf einem Querbalken steht, indem mit dem Querbalken die Schwingköpfe der n>1 Reibschweißköpfe in einer senkrecht zur Längsachse der Strebe verlaufenden Axialebene ortsfest verbunden sind, und ferner n>1 Reibschweißköpfe in einer Orbitalebene um die Strebe herum fixiert sind.

Dabei ist dafür zu sorgen, daß sich die durch Überlagerung der Schwingungen der n Reibachsen der einzelnen Reibschweißköpfe ergebende virtuelle Gesamt-Orbitalreibachse durch den Bereich des Massenschwerpunktes verläuft, und daß die Reibschweißköpfe auf beiden Seiten der Fügeebene mit gleicher Reibfrequenz schwingen, wobei zwischen den Reibschweißköpfen auf der einen Seite der Fügeebene gegenüber den auf der anderen Seite der Fügeebene angeordneten Reibschweißköpfen eine vorgebbare Phasendifferenz eingehalten wird.

Für die Verschweißung von z. B. Überlandleitungen sei es für Gas, Öl oder Wasser aus Kunststoffen Metallen oder Verbundstoffen, ist es zweckmäßig die n Reibschweißköpfe jeweils in orbitaler Anordnung fest um die Rohre verklemmbar an einem Fahrzeug verfahrbar vorzusehen. Selbstverständlich ist es auch möglich in einem solchen Anwendungsfall die zu verschweißenden Rohre durch stationär orbital angeordnete Reibschweißköpfe in die jeweilige Schweißposition verschiebbar vorzusehen und dort während des Verschweißens ortsfest zu fixieren.

Bei einem derartigen Aufbau werden zur weg-zeitgesteuerten Verschiebung der Rohre in die den Schweißdruck bewirkende Position in der Fügeebene vorzugsweise Vorschubaggregate aus Hydraulik- oder Pneumatikantrieben bzw. mechanischen und/oder elektromechanischen Antrieben vorgesehen, die entweder an den Werkstücken oder den mit den Werkstücken festverbundenen Reibscheiben angreifen.

Die Vorteile und Merkmale der Erfindung ergeben sich auch aus nachfolgender Beschreibung von Ausführungsbeispielen in Verbindung mit den Ansprüchen und den Zeichnungen.

Es zeigen:
- Fig. 1: eine schematische Darstellung einer Orbital-Reibschweißvorrichtung zum Verschweißen zweier Rohre längst einer Fügeebene;
- Fig. 2: eine schematische Draufsicht auf die Orbitalebenen mit den Reibschweißköpfen, in einer axialen Ansicht von einer Seite auf die Fügeebene, wobei einerseits die linksseitige Draufsicht auf die Orbitalebene, die mit der Phasenlage Null schwingenden Reibschweißköpfe darstellt, sowie andererseits die mittlere Draufsicht auf die Reibschweißköpfe der Erläuterung einer gleichlaufenden Phase bzw. gegenlaufender Drehrichtung und die rechte Draufsicht auf die Reibschweißköpfe der Erläuterung einer gegenlaufenden Phase bzw. gleichlaufender Drehrichtung dienen;
- Fig. 3A und Fig. 3B: eine Draufsicht auf die Schwingung zweier in der Fügeebene einander gegenüberliegender Reibschweißköpfe, die mit einer Phasendifferenz von 0° bzw. 360° bei gleichlaufender Drehrichtung schwingen;
- Fig. 3C: eine Darstellung, aus der hervorgeht, daß eine 0°/360° Phasendifferenz zu keiner Relativbewegung der Schwingköpfe führt;
- Fig. 4A - Fig. 4C: eine Draufsicht auf einander gegenüberliegender Schwingköpfe, bei einer Phasendifferenz von 45°/315° und gleichlaufender Drehrichtung;
- Fig. 4D und Fig. 4E: die Darstellung einer gleichbleibenden kreisenden Relativbewegung für die Phasendifferenz von 45° gemäß Fig. 4B und 315° gemäß Fig. 4C;
- Fig. 5A - Fig. 5C: eine Draufsicht auf sich gegenüberliegende Schwingköpfe bei einer Phasendifferenz von 90° bzw. 270° und gleichlaufender Drehrichtung;
- Fig. 5D und Fig. 5E: eine Darstellung der sich einstellenden gleichbleibenden kreisenden Relativbewegung für eine 90° Phasendifferenz gemäß Fig. 5B und eine 270° Phasendifferenz gemäß Fig. 5C;
- Fig. 6A - Fig. 6C: eine Draufsicht auf sich gegenüberliegende Schwingköpfe bei einer Phasendifferenz von 135° und 225° und gleichlaufender Drehrichtung;
- Fig. 6D und Fig. 6E: die Darstellung einer gleichbleibenden kreisenden Relativbewegung bei 135° Phasendifferenz gemäß Fig. 6B und 225° gemäß Fig. 6C;
- Fig. 7A und Fig. 7B: eine Draufsicht auf sich gegenüberliegende Schwingköpfe mit einer Phasendifferenz von 180° und gleichlaufender Drehrichtung;
- Fig. 7C: die sich einstellende gleichbleibende sowie kreisende Relativbewegung bei 180° Phasendifferenz gemäß Fig. 7B;
- Fig. 8A und Fig. 8B: eine Draufsicht auf sich gegenüberliegende Schwingköpfe bei einer Phasendifferenz von 0° bzw. 360° und gegenlaufender Drehrichtung;
- Fig. 8C: die sich einstellende lineare Relativbewegung bei einer 360° Phasendifferenz gemäß Fig. 8B;
- Fig. 9A - Fig. 9C: eine Draufsicht auf sich gegenüberstehende Schwingköpfe einer Anfangsphasendifferenz von 45° bzw. 315° und gegenlaufender Drehrichtung;
- Fig. 9D und Fig. 9E: die sich einstellende lineare Relativbewegung bei einer 45° Phasendifferenz gemäß Fig. 9B und einer 315° Phasendifferenz gemäß Fig. 9C;
- Fig. 10A - Fig. 10C: eine Draufsicht auf sich gegenüberstehende Schwingköpfe bei einer Anfangsphasendifferenz von 90° bzw. 270° und gegenlaufender Drehrichtung;
- Fig. 10D und Fig. 10E: die sich einstellende lineare Relativbewegung für eine 90° Phasendifferenz gemäß Fig. 10B und eine 270° Phasendifferenz gemäß Fig. 10C;
- Fig. 11A - Fig. 11C: eine Draufsicht auf sich gegenüberstehende Schwingköpfe bei einer Anfangsphasendifferenz von 135° bzw. 225° und gegenlaufender Drehrichtung;
- Fig. 11D und Fig. 11E: die sich einstellende lineare Relativbewegung bei einer 135° Phasendifferenz gemäß Fig. 11B bzw. einer 225° Phasendifferenz gemäß Fig. 11C;
- Fig. 12A und Fig. 12B: eine Draufsicht auf sich gegenüberstehende Schwingköpfe bei einer Anfangsphasendifferenz von 180° und gegenlaufender Drehrichtung;
- Fig. 12C: die sich einstellenden lineare Relativbewegung bei 180° Phasendifferenz gemäß Fig. 12B;
- Fig. 13: eine schematische Darstellung einer Anordnung von drei Reibschweißköpfen/Vorschubachsen in einer Orbitalebene bezogen auf den Flächenschwerpunkt in der Fügeebene für einen Profilstab.
- Fig. 14: eine schematische Darstellung der Anordnung der Reibschweißköpfe auf einer das zu verschweißende Rohr umlaufenden Scheibe, welche mit Spannschrauben an das zu verschweißende Rohr angeklemmt ist.

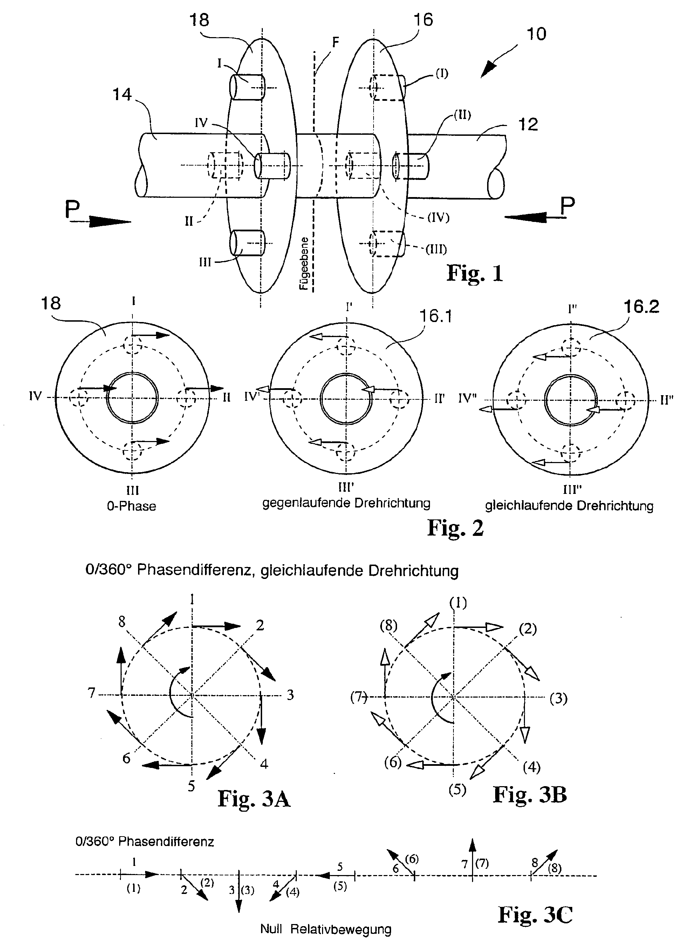

In Fig. 1 ist schematisch eine Orbital-Reibschweißvorrichtung 10 zum Verschweißen zweier langgestreckten Rohrabschnitte 12 und 14 dargestellt, die in einer Fügeebene F stirnseitig durch Axialkräfte P aneinander gedrückt werden. Auf den beiden Rohrabschnitten 12 und 14 sind Orbitalscheiben 16 und 18 ortsfest fixiert. Dabei ist es von Vorteil, wenn die virtuelle Gesamtvorschubachse und die virtuelle Gesamtreibachse aufeinander ausgerichtet sind und der der Fügeflächenschwerpunkt mit dem Massenschwerpunkt deckungsgleich ist. Selbstverständlich sind auch Anwendungsfälle vorgesehen, bei welchen die beiden Schwerpunkte gegeneinander versetzt sind, d.h. die Vorschubachsen müssen nicht notgedrungenerweise mit den Reibachsen deckungsgleich sein.

Dies Orbitalscheiben 16 und 18 dienen der Halterung von Reibschweißköpfen I, II, III, IV bzw. I', II', III', IV' bzw. I", II", III", IV". Diese Reibschweißköpfe sind mit ihrem jeweiligen Schwingkopf an der Orbitalscheibe befestigt, dabei werden sie mit nicht dargestellten Halterungen ortsfest gehalten.

Für die Durchführung der Erfindung verwendbare und geeignete Reibschweißköpfe sind durch die DE 4436857 A bekannt. Der Einsatz dieser Reibschweißköpfe bietet den Vorteil, daß mehrere Reibschweißköpfe leicht zu synchronisieren sind und insbesondere eine einwandfreie Anlaufsynchronisation ermöglichen, so daß der Reibschweißvorgang mit der gewünschten Phase anläuft und die Phasenlage zwischen den gegenüberliegenden Reibschweißköpfen sicher eingehalten werden kann. Dieser bekannte Reibschweißkopf ist mit einem Steuerexzenter und einer Paralellführung ausgerüstet, durch die eine antriebsseitige Rotationsenergie in eine zirkulare parallel geführte Bewegungsenergie umsetzbar ist. Zur Anlaufsynchronisation werden alle Exzenter der einzelnen Reibschweißköpfe auf Vollausschlag gebracht und dann die einander gegenüberliegenden Reibschweißköpfe in die gewünschte Anfangsphasenlage verschoben. Erst nachdem diese Phasenverschiebung zwischen den auf gegenüberliegenden Orbitalscheiben angebrachten Reibschweißköpfen eingestellt ist, werden die Orbitalscheiben 16 und 18 mit den Rohrabschnitten 12 und 14 verklemmt, und anschließend für das Verschweißen der Rohrabschnitte in der Fügeebene in Betrieb genommen.

Zur Erläuterung der Relativbewegung der Schwingköpfe einander gegenüberliegender Reibschweißköpfe sind in Fig. 2 die Orbitalscheiben 16 und 18 dargestellt, wobei die Darstellung der Orbitalscheibe 16.1 der Erläuterung für die gleichlaufende Phase bzw. gegenlaufender Drehrichtung und die Darstellung der Orbitalscheibe 16.2 für die Erläuterung einer gegenlaufenden Phase bzw. gleichlaufender Drehrichtung Verwendung findet. Für die Darstellung sind die kinematischen Verhältnisse in der Fügeebene in einer axialen Ansicht voneiner Seite aus gesehen.

Für diese Erläuterung werden jeweils nur die Reibschweißköpfe I und I' bzw.II' in den nachfolgenden Ausführungen betrachtet. Für die gewünschte Funktion ist ohne weiteres erkennbar, daß jeweils auch die anderen zugehörigen Reibschweißköpfe II, III, IV bzw. II', III', IV' bzw. II", III", IV" mit entsprechend gleicher Frequenz, Amplitude und Phase betrieben werden, so daß sich die gewünschte Relativbewegung einander gegenüberliegender Orbitalscheiben und damit der Rohrabschnitte in der Fügeebene F einstellt.

Während des Schweißvorganges wird auf die zu verschweißenden Rohrabschnitte mit Hilfe von Vorschubaggregaten ein Axialdruck aufgebracht, der sowohl über die Rohrabschnitte selbst als auch über die um die ortsfest mit den Rohrabschnitten fixierten Orbitalscheiben einleitbar ist. Diese Vorschubaggregate können aus Hydraulik- oder Pneumatikantrieben bzw. aus mechanischen und/oder elektromechanischen Antrieben bestehen.

Da sich der Flächenschwerpunkt in der Fügeebene für beide Rohrabschnitte im Zentrum der Rohre befindet, werden die einzelnen Reibschweißköpfe in einer winkelsymmetrischen Lage um den Flächenschwerpunkt und in einem gleichen Abstand vom Flächenschwerpunkt angeordnet, wobei über alle Reibschweißköpfe die gleiche Bewegungsenergie in die Orbitalscheiben und damit in jeden Punkt der Fügefläche, d. h. der Schweißnaht eingeleitet wird. Entsprechend dem für die Rohre verwendeten Material bzw. der Dicke der Rohrwandung und der sich daraus ergebenden Materialmenge ist eine größere oder kleinere Energiemenge für den Schweißvorgang erforderlich. Zur Anpassung ist bei derartigen Verhältnissen vorgesehen, daß abweichend von den dargestellten vier Reibschweißköpfen auf einer Orbitalscheibe weniger d. h. z. B. drei oder auch mehr Reibschweißköpfe angeordnet werden können, um die erforderliche Schweißenergie aufzubringen.

Obwohl es aus Wirtschaftlichkeitsgründen vorteilhaft ist, typengleiche Reibschweißköpfe zu verwenden, die jeweils die gleiche Reibschweißenergie zur Verfügung stellen, können auf einer Orbitalscheibe auch unterschiedliche Typen Verwendung finden, wobei lediglich darauf zu achten ist, daß einerseits die Winkelsymmetrie zum Flächenschwerpunkt und andererseits das Produkt aus Abstand der Reibachsen vom Fügeflächenschwerpunkt und der jeweiligen eingeleiteten Schwingungsenergie bei gleichbleibenden Axialdruck auf die zu verschweißenden Rohre konstant gehalten wird.

Im nachfolgenden werden die sich einstellende Relativbewegungen bzw. die sich einstellenden Schubvektoren zwischen den beiden Orbitalscheiben 16 und 18 für unterschiedliche gleichlaufende bzw. gegenlaufende Drehrichtungen und die wirksamen Phasendifferenzen zwischen den beiden Orbitalscheiben erläutert. Da sich bei gleicher Phasenlage aller Reibschweißköpfe auf einer Orbitalscheibe gleiche Verhältnisse einstellen, wird nachfolgend lediglich jeweils das Schwingverhalten der Schwingköpfe für die beiden Reibschweißköpfe I und (I) erläutert.

In den Fig. 3A und 3B sind die Verhältnisse für die Schwingköpfe der Reibschweißköpfe I und (I) dargestellt, wobei die Pfeilspitzen der Bewegungsvektoren für die Nullphase zu allen Zeitpunkten 1, 2, 3, 4, 5, 6, 7, 8 voll ausgefüllt sind und die Bewegungsvektoren für die gleichlaufende Phase bzw. gegenlaufende Drehrichtung entsprechend für alle Zeitpunkte (1), (2), (3), (4), (5), (6), (7), (8) mit einer weiß ausgefüllten Pfeilspitze gekennzeichnet ist. Entsprechendes gilt auch für die nachfolgend erläuterten Phasenverschiebungen.

In den Fig. 3A und 3B ist die Phasendifferenz 0° bzw. Phasendifferenz 360° bei gleichlaufender Drehrichtung dargestellt. Durch die Überlagerung der Bewegungsvektoren gleicher Größe zu den verschiedenen Zeitpunkten 1 bis 8 bzw. (1) bis (8) in jeweils gleicher Größe und Richtung ergibt sich keine Relativbewegung für die Schwingköpfe der auf der Orbitalscheibe 16 und 18 einander gegenüberliegenden Reibschweißköpfe. Dies geht auch aus der Darstellung gem. Fig. 3C hervor, in der die Bewegungsvektoren für alle dargestellten Zeitpunkte deckungsgleich hintereinander liegen, so daß sich keine Relativbewegung ergibt.

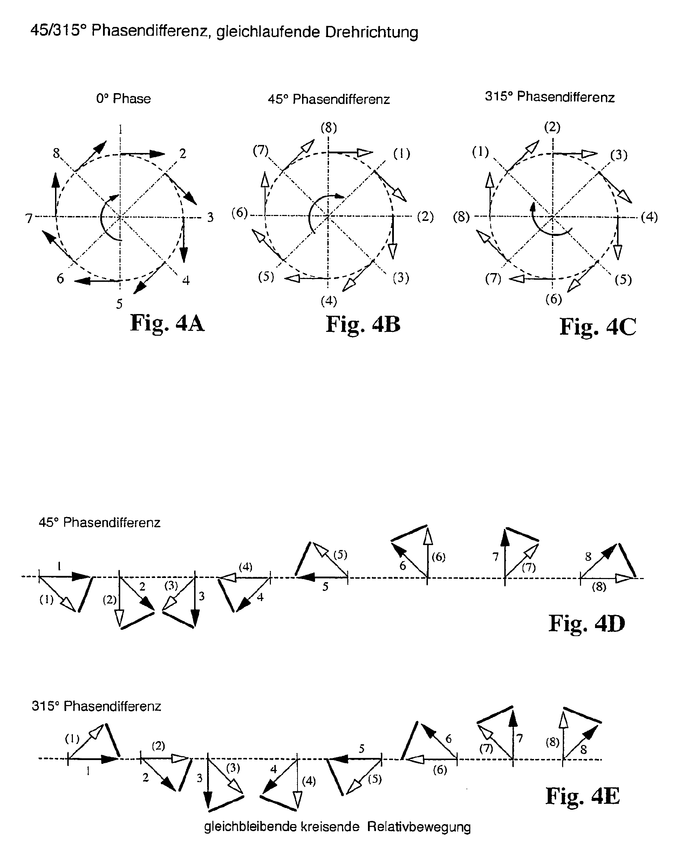

Anhand der Fig. 4A und 4B läßt sich bei einer Phasendifferenz von 45° eine gleichbleibende kreisende Relativbewegung ableiten, indem die Vektoren für die einzelnen betrachteten Zeitpunkte gem. Fig. 4D aufgetragen werden. Aus der Darstellung ergibt sich, daß sich zwischen den beiden Schwingköpfen der Reibschweißköpfe I und (I) eine Relativbewegung einstellt, die in der Darstellung gem. Fig. 4D durch die dickere Verbindungslinie zwischen den Spitzen der beiden Bewegungsvektoren charakterisiert wird.

Das gleiche gilt auch für die Phasendifferenz von 315° wie sich aus dem Vergleich der Bewegungsvektoren der Fig. 4A und Fig. 4C gemäß der Darstellung Fig. 4E ergibt. In beiden Fällen stellt sich eine gleichbleibende kreisende Relativbewegung bzw. ein gleichbleibender kreisender Schubvektor ein.

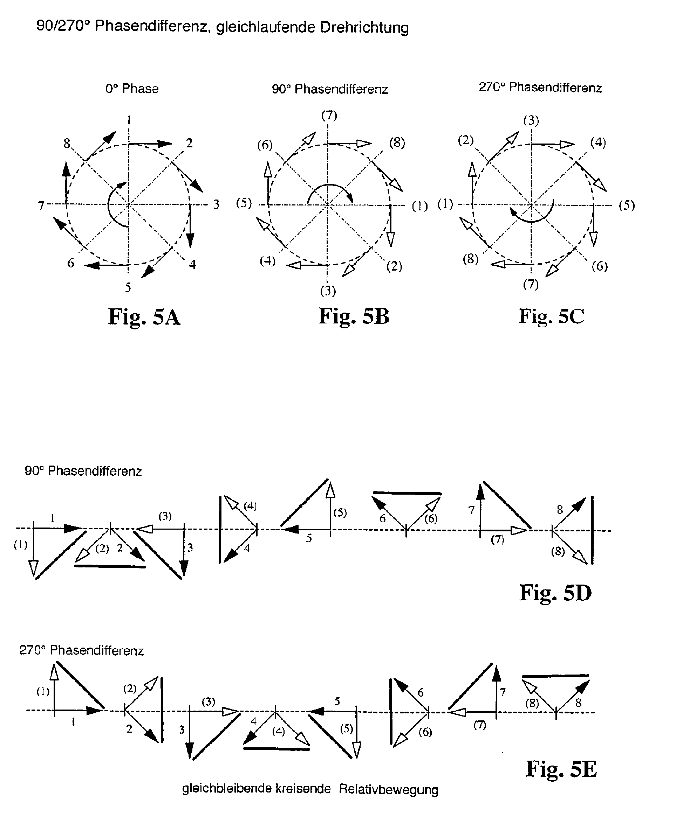

Entsprechende Betrachtungen können anhand der Fig. 5A und Fig. 5B bzw. Fig. 5A und Fig. 5C für eine Phasendifferenz von 90° bzw. 270° bei gleichlaufender Drehrichtung ermittelt werden. Die entsprechende Überlagerung der Bewegungsvektoren ist in den Fig. 5D für die 90° Phasendifferenz und in Fig. 5E für die 270° Phasendifferenz dargestellt. Aus diesen Darstellungen kann man erkennen, daß sich bei der 90° Phasendifferenz und der 270° Phasendifferenz eine größere Relativbewegung einstellt, als dies bei der 45° Phasendifferenz und der 315° Phasendifferenz der Fall ist.

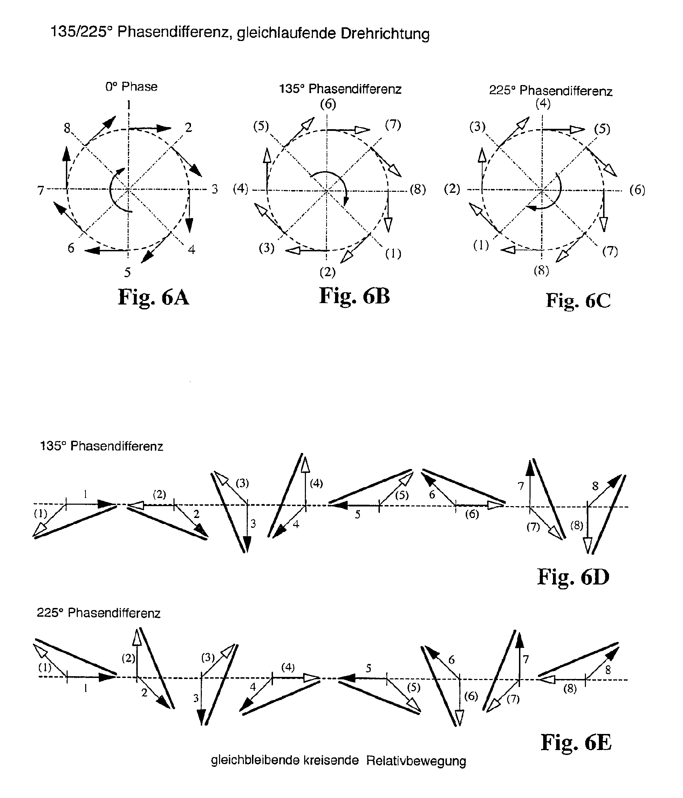

Entsprechendes gilt auch für die Phasendifferenz 135° bzw. 225° bei gleichlaufender Drehrichtung, was sich aus Überlagerung der Bewegungsvektoren gemäß Fig. 6A und Fig. 6B, bzw. Fig. 6A und Fig. 6C ergibt. Die in den Fig. 6D und Fig. 6E durch Überlagerung der Vektoren der Bewegungsvektoren dargestellte Relativbewegung ist ebenfalls eine gleichbleibende kreisende Relativbewegung, jedoch im Vergleich mit den zuvor betrachteten Fällen hat sie eine größere Amplitude.

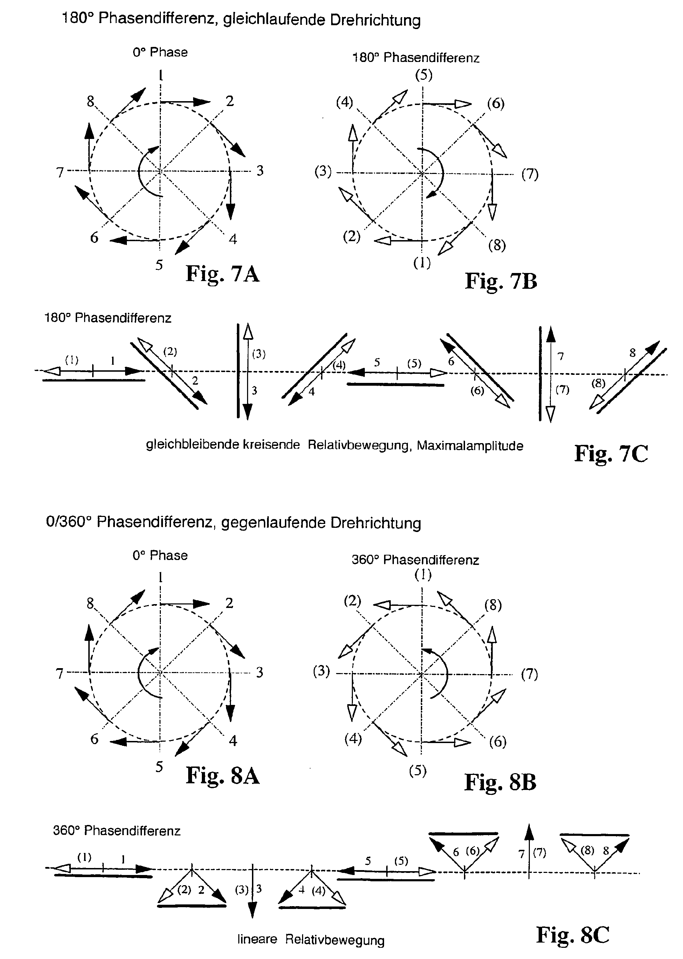

Für die Betrachtung der Phasendifferenz von 180° ergibt sich bei gleichlaufender Drehrichtung durch die Überlagerung der Bewegungsvektoren für die einzeln angegebenen Zeitpunkte eine maximal Amplitude der gleichbleibenden kreisenden Relativbewegung, wie sie aus Fig. 7C hervorgeht.

Für alle vorausstehend betrachteten Fälle der verschiedenen Phasendifferenzen erkennt man, daß die Relativbewegung, die sich durch die Überlagerung der Bewegungsvektoren der einzelnen Reibschweißköpfe auf gegenüberliegenden Orbitalscheiben einstellt, immer eine gleichbleibende kreisende Relativbewegung ist, die sich lediglich in ihrer Amplitude und ihrer kreisenden Bewegung bezüglich der betrachteten Zeitpunkte 1 bis 8 bzw. (1) bis (8) ändert.

Daraus leitet sich die Möglichkeit ab, sowohl die Linearrichtung, d. h. die Reibrichtung in Abhängigkeit von der Phasenlage als auch den Energieeintrag in Abhängigkeit von der Phasenlage durch eine Einstellung der Phasenlage blitzschnell zu ändern.

In der nachfolgenden Betrachtung werden die Überlagerungen der Bewegungsvektoren für unterschiedliche Zeitpunkte 1 bis 8 und (1) bis (8) bei einer gegenlaufenden Drehrichtung betrachtet.

In den Fig. 8A und 8B sind die Verhältnisse einer gegenlaufenden Drehrichtung bei einer 0° Phasendifferenz und einer 360° Phasendifferenz gezeigt. Durch Überlagerung der Bewegungsvektoren, der mit gleichen arabischen Ziffern bezeichneten Zeitpunkten, ergeben sich die in Fig. 8C für eine 0° und 360° Phasendifferenz dargestellten Relativbewegungen, wobei man erkennt, daß sich eine lineare Relativbewegung mit Ausnahme für die Zeitpunkte 3 und 7 einstellt, in welchen die Relativbewegung 0 beträgt.

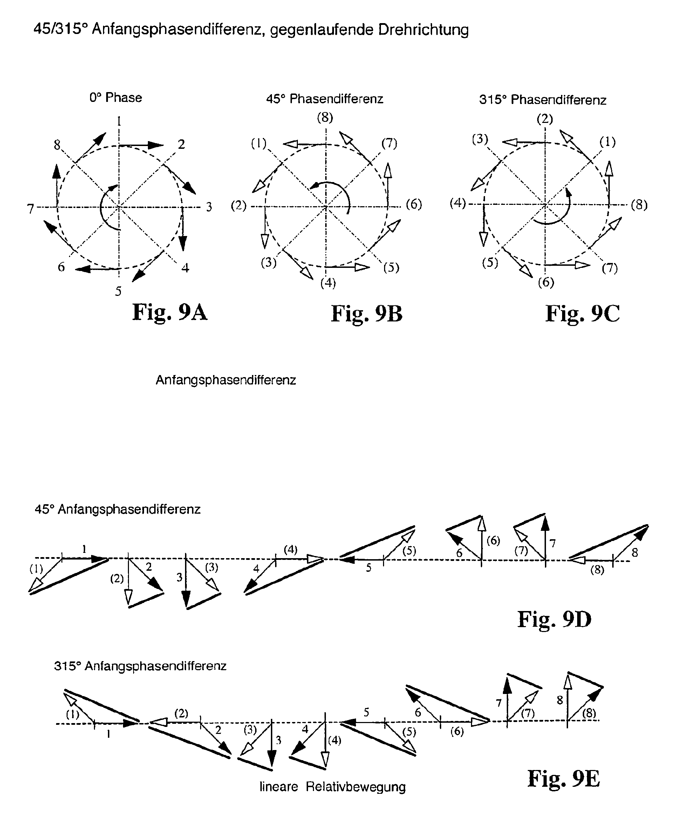

In den Fig. 9A bis Fig. 9C sind die Verhältnisse für eine gegenlaufende Drehrichtung und eine Anfangsphasendifferenz von 45° und 315° mit stetig wechselnder Phasendifferenz dargestellt. Durch die Überlagerung der Bewegungsvektoren gemäß den Fig. 9A und 9B ergibt sich für die 45° Anfangsphasendifferenz eine lineare Relativbewegung der Amplitude für die Zeitpunkt der 2, 3, 6 und 7, die kleiner als die Amplitude zu den Zeitpunkten 1, 4, 5, und 8 ist. Dabei durchläuft die Amplitude bei einer Phasendifferenz von 45° bei 67,5° und 247,5° einen Amplituden-Nullwert und bei 157,5° sowie 337,5° einen Amplituden-Maximalwert.

Entsprechendes gilt auch für die Überlagerung der Bewegungsvektoren gemäß Fig. 9A und Fig. 9C, wobei sich lediglich eine von der Phasenverschiebung abhängige Verschiebung der linearen Relativbewegung bezüglich der dargestellten Zeitpunkte ergibt. In diesem Fall liegt der Amplituden-Nullwert bei 112,5° und 292,5° und der Amplituden-Maximalwert bei 22,5° sowie 202,5°.

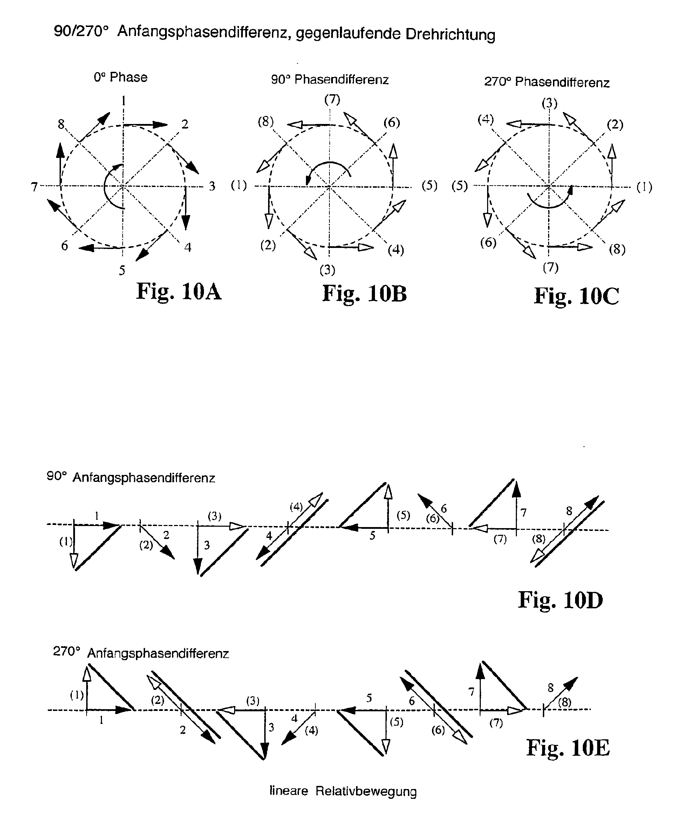

Auch für die Darstellung gemäß Fig. 10A bis Fig. 10C stellen sich entsprechende Ergebnisse für eine gegenlaufende Drehrichtung bei einer Anfangsphasendifferenz von 90° bzw. 270° ein. Für die 90° Anfangsphasendifferenz gemäß Fig. 10A und Fig. 10B ergibt sich eine lineare Relativbewegung gemäß Fig. 10D, wobei sich ebenfalls die Amplitude der Relativbewegung für die einzelnen Zeitpunkte verändert und zu den Zeitpunkten 2 und 6 keine Relativbewegung auftritt.

Bei einer Anfangsphasendifferenz von 270° und einer Überlagerung der Bewegungsvektoren gemäß den Fig. 10A und Fig. 10C stellt sich dieselbe Relativbewegung mit veränderlicher Amplitude ein, wobei zu den Zeitpunkten 4 und 8 keine Relativbewegung auftritt.

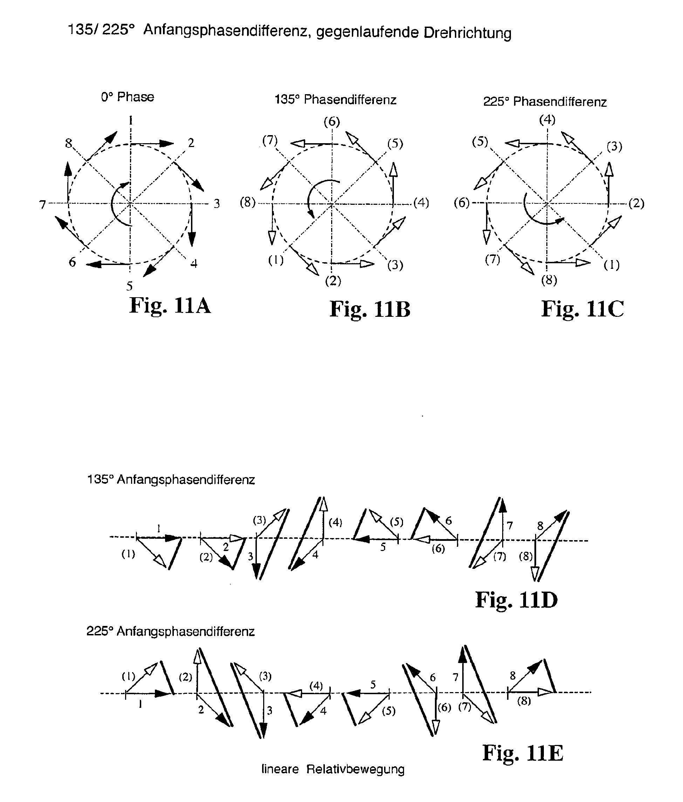

Für eine gegenlaufende Drehrichtung und eine Anfangsphasendifferenz von 135° bzw. 225° stellen sich für die Überlagerung gemäß den Fig. 11A und 11B bei einer 135° Anfangsphasendifferenz die Verhältnisse gemäß Fig. 11D ein. Man erkennt ebenfalls eine lineare Relativbewegung deren Amplitude mit den einzelnen betrachteten Zeitpunkten größer und kleiner wird. Das gleiche gilt auch für die Überlagerung der Bewegungsvektoren gemäß den Fig. 11A und Fig. 11C, die bei der 225° Anfangsphasendifferenz zu einer linearen Relativbewegung gemäß Fig. 11E mit sich ändernder Amplitude führt. In diesem Fall stellt sich für eine Phasendifferenz beim Schwingungsbeginn von 135° der Amplituden-Nullwert bei 22,5° und 202,5° sowie der Amplituden-Maximalwert bei 112,5° und 292,5° ein. Das gleich gilt für eine Phasendifferenz beim Schwingungsbeginn von 225° mit einem Amplituden-Nullwert bei 157,5° und 337,5° sowie Amplituden-Maximalwert bei 67,5° und 247,5°.

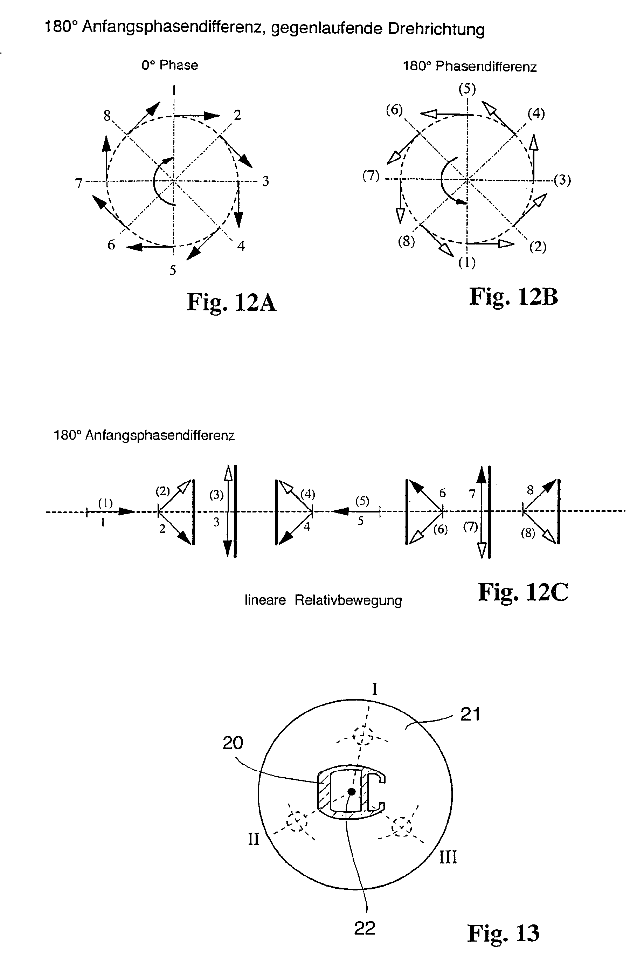

Schließlich werden die Verhältnisse für eine gegenlaufende Drehrichtung bei einer Anfangsphasendifferenz von 180° gezeigt, in dem die Bewegungsvektoren gemäß den Fig. 12A und Fig. 12B einander überlagert werden. Diese Überlagerung führt bei der 180° Phasendifferenz zu einer linearen Relativbewegung gemäß Fig. 12C, wobei sich für die Zeitpunkte 1 und 5 keine Relativbewegung einstellt.

In Fig. 13 ist schematisch eine mit einem Profilstab verbundene Orbitalscheibe 21 dargestellt, auf welcher drei Reibschweißköpfe I, II und III angeordnet sind. In der Darstellung ist ferner der Flächenschwerpunkt 22 gezeigt, der über gestrichelte Verbindungslinien mit den Reibschweißköpfen verbunden ist. Um sicherzustellen, daß in jeden Punkt der Schweißnaht die gleiche Energie eingetragen wird, sind die Reibschweißköpfe auf der Orbitalscheibe in einer Position angeordnet, in der bei gleicher Energieleistung das Produkt aus Abstand und im jeweiligen Reibschweißkopf wirksamen Axialdruckkraft konstant ist. Dadurch wir ein gleichmäßiger Energieeintrag in die Fügeflächen und damit eine gleichmäßige, in der Fügeebene verlaufende Schweißnaht gewährleistet.

Es ist auch möglich, daß die Reibschweißköpfe aus Raumgründen schwerpunktmäßig auf einer Seite der Orbitalscheiben angeordnet sein müssen. Dann ist für einen Massenausgleich mit Hilfe von Auswuchtgewichten zu sorgen. Dabei muß die virtuelle Gesamtreibachse durch den Massenschwerpunkt aller bewegten Massen verlaufen.

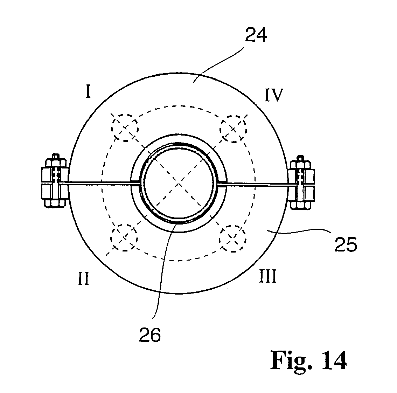

Um eine ortsfeste Fixierung an dem zu verschweißenden Werkstück gewährleisten zu können, sind unterschiedlichste Verfahren vorgesehen. Für den Anwendungsfall der Verschweißung von Rohren ist in Fig. 14 eine einfache Lösung dargestellt, die eine in zwei Hälften 24 und 25 unterteilte Orbitalscheibe zeigt, welche zur Verschweißung eines rohrförmigen Werkstückes am Umfang des Rohres anliegen und mit dem Rohr fest verspannt ist.

Eine derartige teilbare und zusammenspannbare Orbitalscheibe mit den Reibschweißköpfen I, II, III und IV kann z. B. an einem Fahrzeug befestigt sein, das zum Verschweißen von langen Rohrleitungen wie z. B. Gas-, Öl- oder Wasserleitungen an den hintereinandergelegten Rohren entlang fährt und an jeder Schweißstelle beide miteinander zu verschweißende Rohrabschnitte aufgreift, diese zwischen den Orbitalscheiben verklemmt und den für die Verschweißung notwendigen Axialdruck in die Fügeebene einleitet.

Die Reibschweißung derartiger Rohre mit Hilfe der Erfindung läuft in sehr kurzen Zeitabständen ab, wobei davon ausgegangen werden kann, daß für den eigentlichen Schweißvorgang weniger als einige Minuten bei entsprechender Energieeinleitung benötigt werden. Wenn zum Vergleich die Verschweißung von Rohrleitungen mit herkömmlichen Schweißmethoden herangezogen wird, so ergibt sich ein extrem großer wirtschaftlicher Vorteil, da die Herstellung hochqualitativer Schweißnähte an derartigen hochbelasteten Rohren mit herkömmlichen Mitteln einen Zeitraum von mehr als dem 10- bis 100-fachen an Zeit in Anspruch nimmt.

Anstelle einer verfahrbaren Orbital-Reibschweißvorrichtung gemäß der Erfindung kann die Schweißvorrichtung auch stationär aufgestellt sein, um eine Vielzahl von zuverschweißenden Rohren nacheinander durch die Schweißvorrichtung zu verschieben und zu verschweißen.

Ein nicht dargestellter Anwendungsfall der Erfindung ist die Verschweißung von T-förmig senkrecht aufeinander stehenden Werkstücken, wie z. B. eine T-förmige Rohrabzweigung oder eine auf einem Querbalken stehende Strebe.

Zu diesem Zweck werden mit dem Querbalken die Schwingköpfe der n Reibschweißköpfe in einer senkrecht zur Längsachse der Strebe verlaufenden Axialebene ortsfest verbunden und auf der anderen Seite der Fügeebene, d. h. in einer Orbitalebene um die Strebe herum weitere n Reibschweißköpfe fixiert. Die Schwingköpfe der Reibschweißköpfe werden auf beiden Seiten der Fügeebene mit gleicher Reibfrequenz in Schwingung versetzt, wobei zwischen den Reibschweißköpfen auf der einen Seite der Fügeebene gegenüber denen auf der anderen Seite der Fügeebene angeordneten Reibschweißköpfen eine vorgebbare Phasendifferenz einhaltbar ist. Hierzu kann eine lineare Schwingung durch gegenlaufende Drehrichtung oder eine kreisende Schwingung durch gleichlaufende Drehrichtung Anwendung finden.

## Patentansprüche

1. Orbital-Reibschweissverfahren zum Verschweissen von Werkstücken (12; 14; 20; 26), wobei die Werkstücke während der Einleitung der Schwingungsenergie in die Fügeebene (F) gegeneinander gedrückt werden,
**dadurch gekennzeichnet,**
**dass** zumindest auf einer Seite der Fügeebene (F) n > 1 Reibschweissköpfe (I, II, III, IV) an zumindest einer Orbitalscheibe (18; 21) in einer Orbitalebene im Bereich der Werkstücke (12; 14; 20; 26) derart angebracht werden, dass die Schwingköpfe der Reibschweissköpfe (I, II, III, IV) ortsfest mit der Orbitalscheibe (18; 21) verbunden sind, und
**dass** die jeweils einer Seite zugewandten n > 1 Reibschweissköpfe (I, II, III, IV) mit einer gleichen Reibfrequenz und gleicher Amplitude sowie einer gleichen vorgegebenen Phasenlage in Schwingung versetzt werden.

2. Orbital-Reibschweissverfahren nach Anspruch 1,
**dadurch gekennzeichnet,**
**dass** der Vorschub bzw. der Fügedruck der für den Energieeintrag benötigten n > 1 Reibschweissköpfe (I, II, III, IV) über n > 1 Vorschubachsen derart erfolgt, dass die sich durch Überlagerung ergebende virtuelle Gesamtschubachse durch den Bereich des Fügeflächenschwerpunktes (22) verläuft.

3. Orbital-Rcibschweissverfahren nach Anspruch 1,
**dadurch gekennzeichnet,**
**dass** die n > 1 Reibschweissköpfe (I, II, III, IV) derart angeordnet werden, dass die Reibachsen in der Summe mit ihrer virtuellen Gesamtreibachse durch den Bereich des Massenschwerpunktes aller schwingender Massen verläuft.

4. Orbital-Reibschweissverfahren nach nach einem der Ansprüche 1 bis 3
**dadurch gekennzeichnet,**
**dass** Schwingköpfe von n > 1 Reibschweissköpfen (I, II, III, IV; I', II', III', IV') auf beiden Seiten der Fügeebene (F) jeweils an Orbitalscheiben (18, 16) ortsfest angebracht werden, und
**dass** die n > 1 Reibschweissköpfe (I, II, III, IV) auf der einen Seite der Fügeebene (F) mit einer vorgebbaren Phasenlage gegenüber den n > 1 Reibschweissköpfen (I', II', III', IV') auf der anderen Seite der Fügeebene (F) in Schwingung versetzt werden.

5. Orbital-Reibschweissverfahren nach einem oder mehreren der Ansprüche 1 bis 4,
**dadurch gekennzeichnet,**
**dass** der Druck, mit welchem die Werkstücke in der Fügeebene, (F) gegeneinander gedrückt werden, dadurch erzeugt wird, dass Vorschubaggregate die Werkstücke in Axialrichtung weg-zeitgesteuert zusammenführen.

6. Orbital-Reibschweissvorrichtung zur Durchführung des Verfahrens nach einem oder mehreren der Ansprüche 1 bis 5, wobei eine zirkulare Bewegungsenergie zum Verschweissen von den unter Achsdruck stehenden Werkstücken (12; 14; 20; 26) mit einem beliebigen Querschnitt in der Fügeebene (F) in die Fügeebene einleitbar ist,
**dadurch gekennzeichnet,**
**dass** Schwingköpfe von n > 1 Reibschweissköpfen (I, II, III, IV) in zumindest einer Orbitalebene um die zu verschweissenden Werkstücke (12; 14; 20; 26) herum an zumindest einer Orbitalscheibe (18) ortsfest derart angeordnet sind, dass die sich durch Überlagerung der n > 1 Reibachsen der einzelnen Reibschweissköpfe (I, II, III, IV) ergebende virtuelle Gesamt-Orbitalreibachse durch den Bereich des Massenschwerpunktes (22) verläuft, und dass die n > 1 Reibschweissköpfe (I, II, III, IV) mit gleicher Reibfrequenz und gleicher Amplitude sowie einer vorgebbaren Phasenlage schwingen.

7. Orbital-Reibschweissvorrichtung nach Anspruch 6,
**dadurch gekennzeichnet,**
**dass** bei Kraftsteuerung alle Vorschubachsen zur Herstellung der Flächensymmetrie bezüglich des Fügeflächenschwerpunktes (22) gleichen Abstand ihrer Vorschubachsen vom Fügeflächenschwerpunkt (22) in der Fügeebene (F) bei gleichzeitiger winkelsymmetrischer Anordnung haben, und
**dass** das Produkt aus Abstand der einzelnen Vorschubachse vom Fügeflächenschwerpunkt (22) und der jeweiligen Axialdruckkraft (P) in der Gesamt-Orbitalreibachse für alle Vorschubachsen konstant ist.

8. Orbital-Reibschweissvorrichtung nach Anspruch 6,
**dadurch gekennzeichnet,**
**dass** alle Vorschubachsen unterschiedliche Abstände vom Fügeflächenschwerpunkt (22) haben,
**dass** die Axialdruckkraft (P) der jeweiligen Vorschubachse unter Berücksichtigung der Winkellage der Vorschubachsen zueinander umgekehrt proportional zu ihrem Abstand vom Fügeflächenschwerpunkt (22) ist, und
**dass** das Produkt aus Abstand der einzelnen Vorschubachse vom Fügeflächcnschwcrpunkt (22) und der jeweiligen Axialdruckkraft (P) in der Gesamt-Orbitalreibachse für alle Vorschubachsen konstant ist.

9. Orbital-Reibschweissvorrichtung nach einem oder mehreren der Ansprüche 6 bis 8,
**dadurch gekennzeichnet,**
**dass** beiderseits der Fügeebene (F) eine Mehrzahl von Reibschweissköpfen (I, II, III, IV; I', II', III', IV') an einer in der Orbitalebene angebrachten Orbitalscheibe (18, 16) um die zu verschweissenden Werkstücke (14, 12) herum ortsfest angeordnet sind, und
**dass** alle an der gleichen Orbitalscheiben (18, 16) angeordneten Reibschweissköpfe (I, II, III, IV; I', II', III', IV') mit gleicher Frequenz, gleicher Amplitude und gleicher Phasenlage schwingen.

10. Orbital-Reibschweissvorrichtung nach einem oder mehreren der Ansprüche 6 bis 8,
**dadurch gekennzeichnet,**
**dass** das eine von den stirnseitig zu verschweissenden Werkstücken (12, 14) ortsfest fixiert ist, und
**dass** die um das andere Werkstück (14, 12) an der Orbitalscheibe (18, 16) fixierten n > 1 Reibschweissköpfe (I, II, III, IV) dieses in Reibschwingung versetzen.

11. Orbical-Reibschweissvorrichtung nach einem oder mehreren der Ansprüche 6 bis 9,
**dadurch gekennzeichnet,**
**dass** umlaufend n > 1 Reibschweissköpfe (I, II, III, IV; I', II', III', IV') auf beiden Seiten der Fügeebene (F) der stirnseitig zu verschweissenden Werkstücke (12, 14) fixiert sind, wobei sich die n > 1 Reibschweissköpfe (I, II, III, IV; I', II', III', IV') auf beiden Seiten der Fügeebene (F) mit einer Schwingung mit gleichlaufender Phase bzw. gegenlaufender Drehrichtung und mit einer stetig wechselnden Phasendifferenz bei vorgegebener Anlaufphase gegenüberstehen. (Lineare Relativbewegung)

12. Orbital-Reibschweissvorrichtung nach einem oder mehreren der Ansprüche 6 bis 9,
**dadurch gekennzeichnet,**
**dass** die auf der einen Seite der Fügeebene (F) fixierten n > 1 Reibschweissköpfe (I, II, III, IV) gegenüber den auf der anderen Seite der Fügeebene (F) angeordneten n > 1 Reibschweissköpfen (I", II", III",IV") mit einer gegenlaufenden Phase bzw. gleichlaufenden Drehrichtung mit einer vorgegebenen Phasendifferenz schwingen. (Kreisende Relativbewegung)

13. Orbital-Reibschweissvorrichtung nach einem der Ansprüche 11 oder 12,
**dadurch gekennzeichnet,**
**dass** die auf der einen Seite der Fügeebene (F) fixierten n > 1 Reibschweissköpfe (I, II, III, IV) gegenüber den auf der anderen Seite der Fügeebene angeordneten n > 1 Reibschweissköpfen (I', II', III', IV' bzw. I", II", III", IV") mit einer Phasendifferenz zwischen 0° und 360° schwingen.

14. Orbital-Reibschweissvorrichtung nach einem oder mehreren der Ansprüche 8 bis 11,
**dadurch gekennzeichnet,**
**dass** zur Erhöhung der in die Fügeebene (F) einzuleitenden Schwingungsenergie mehrere Aggregate von Reibschweissköpfen (I, II, III, IV) auf radial und/oder axial hintereinander angeordneten Orbitalscheiben um den Umfang des Werkstückes oder der Werkstücke (12; 14; 20; 26) fixiert sind.

15. Orbital-Reibschweissvorrichtung nach einem oder mehreren der Ansprüche 6 bis 14,
**dadurch gekennzeichnet,**
**dass** die n > 1 Reibschweissköpfe (I, II, III, IV; I', II', III', IV') jeweils an Orbitalscheiben (24, 25) ortsfest um die Werkstücke (12; 14; 20; 26) montiert mit einem Fahrzeug positionierbar sind, oder dass die Werkstücke (12; 14; 20; 26) durch die stationär orbital angeordneten Reibschweissköpfe in die jeweilige Schweissposition verschiebbar und dort ortsfest fixierbar sind.

16. Orbital-Reibschweissvorrichtung nach einem oder mehreren der Ansprüche 6 bis 15,
**dadurch gekennzeichnet,**
**dass** die mit den n > 1 Reibschweissköpfen (I, II, III, IV; I', II', III', IV') versehenen und mit den Werkstücken (12; 14; 20; 26) verbundenen Orbitalscheiben (18; 16; 24, 25) zur Erzeugung des während der Einleitung der Schwingungsenergie in die Fügeebenc (F) einzuleitenden Druckes mit Hilfe von Vorschubaggregaten weg-zeitgesteuert gegeneinander verschiebbar sind, wobei dadurch die virtuelle Gesamtschubachse durch den Fügeflächenschwerpunkt (22) der Werkstücke (12; 14; 20; 26) verläuft.

17. Orbital-Reibschweissvorrichtung nach Anspruch 16,
**dadurch gekennzeichnet,**
**dass** die Vorschubaggregate an den beiderseits der Fügeebene (F) angeordneten und mit den Werkstücken (12; 14; 20; 26) fest verbundenen Orbitalscheiben (18; 16; 24, 25) angreifen.

18. Orbital-Reibschweissvorrichtung nach den Ansprüchen 16 und 17,
**dadurch gekennzeichnet,**
**dass** die Vorschubaggregate aus Hydraulik- oder Pneumatikantrieben bzw. mechanischen und/oder elektromechanischen Antrieben bestehen.

19. Orbital-Reibschweissvorrichtung nach einem oder mehreren der Ansprüche 6 bis 17 mit n > 1 Reibschweissköpfen (I, II, III, IV) zum Vcrschweissen von Werkstücken (12; 14; 20; 26) mit einem beliebigen Querschnitt in der Fügeebene (F), wobei auf die unter Achsendruck stehenden Werkstücke (12; 14; 20; 26) von den Reibschweissköpfen (I, II, III, IV)aus eine zirkular Bewegungsenergie senkrecht in die Fügeebene (F) einleitbar ist,
**dadurch gekennzeichnet,**
**dass** die Werkstücken (12; 14; 20; 26) winklig bzw. T-förmig aufeinander stehen und aus einer von einem Längsrohr abgehenden Rohrabzweigung oder einer von einem Querbalken ausgehende Strebe bestehen,
**dass** mit dem Längsrohr bzw. dem Querbalken n Reibschweissköpfe (I', II', III', IV') in einer senkrecht zur Längsachse der Rohrabzweigung bzw. der Strebe verlaufenden Längs-axialebene ortsfest verbunden sind,
**dass** n > 1 Reibschweissköpfe (I, II, III, IV) in einer Orbitalebene um die Rohrabzweigung bzw. die Siebe herum fixiert sind,
**dass** die durch Überlagerung der Schwingungen der n Reibachsen der einzelnen Reibschweissköpfe (I', II', III', IV')sich ergebende virtuelle Gesamt-Orbitalreibachse durch den Bereich des Massenschwerpunkts verläuft, und
**dass** die Reibschweissköpfe (I, II, III, IV; I', II', III', IV') auf beiden Seiten der Fügeebene (F) mit gleicher Reibfrequenz schwingen, wobei die Reibschweissköpfe (I, II, III, IV) auf der einen Seite der Fügeebene gegenüber denen auf der anderen Seite der Fügeebene angeordneten Reibschweissköpfen (I', II', III', IV') mit gegenlaufender Phase und einer vorgegebenen Phasendifferenz derart schwingen, dass eine lineare Relativbewegung zwischen den Werkstücken (12; 14; 20; 26) in der Fügeebene (F) entsteht.

20. Orbital-Reibschweissvorrichtung nach einem oder mehreren der Ansprüche 6 bis18,
**dadurch gekennzeichnet,**
**dass** sie zum Verschweissen von Werkstücken (12; 14; 20; 26) Verwendung findet, deren Länge wesentlich grösser als deren Quererstreckung (L>>D) ist.

21. Orbital-Reibschweissvorrichtung nach einem oder mehreren der Ansprüche 6 bis 18,
**dadurch gekennzeichnet,**
**dass** sie zum Verschweissen von Werkstücken (12; 14; 20; 26) Verwendung findet, deren Quererstreckung wesentlich grösser als deren Längscrstreckung (D>>L) ist.

22. Orbital-Reibschweissvorrichtung nach einem oder mehreren der Ansprüche 6 bis 18,
**dadurch gekennzeichnet,**
**dass** sie zum Verschweissen von Werkstücken aus Verbundwerkstoffen Verwendung findet, wobei der Vorschub weg-zeitgesteuert erfolgt.

## Claims

1. An orbital friction welding method for the welding of workpieces (12; 14; 20; 26), wherein the workpieces, during the introduction of the vibratory energy into the joining plane (F), are pressed together,
**characterized in that**
at least on one side of the joining plane (F), more than one (n > 1) friction welding heads (I, II, III, IV) are so mounted to at least one orbital disk (18; 21) in an orbital plane in the area of the workpieces (12; 14; 20; 26) that the vibration heads of the friction welding heads (I, II, III, IV) are stationarily attached to the orbital disk (18; 21), and
the more than one (n > 1) friction welding heads (I, II, III, IV) facing one side, respectively, are set into vibration at the same friction frequency and the same amplitude as well as an equal, predetermined phase position.

2. An orbital friction welding method in accord with claim 1,
**characterized in that**
the feeding or the joining pressure, respectively, of the more than one (n > 1) friction welding heads (I, II, III, IV) required for the energy input is generated using more than one (n > 1) feed axes in such a manner that the virtual combined feed axis, which is formed by superimposition, runs through the area of the joining plane centroid (22).

3. An orbital friction welding method in accord with claim 1,
**characterized in that**
the more than one (n > 1) friction welding heads (I, II, III, IV) are so arranged that the friction axes in total with their virtual combined friction axis run through the area of the mass centroid of all vibrating masses.

4. An orbital friction welding method in accord with any of claims 1 to 3,
**characterized in that**
the vibration heads of the more than one (n > 1) friction welding heads (I, II, III, IV; I', II', III', IV') are stationarily mounted on orbital disks (18, 16) on both sides of the joining plane (F), respectively, and
the more than one (n > 1) friction welding heads (I, II, III, IV) on the one side of the joining plane (F) are set into vibration with a predeterminable phase position with reference to the more than one (n > 1) friction welding heads (I', II', III', IV') on the other side of the joining plane (F).

5. An orbital friction welding method in accord with any of claims 1 to 4,
**characterized in that**
the pressure with which the workpieces in the joining plane (F) are forced against one another is generated by feed units which guide the workpieces together in the axial direction under a time/distance control.

6. An orbital friction welding device for carrying out the method in accord with any of claims 1 to 5, wherein a circular movement energy can be introduced into the joining plane for welding workpieces (12,14; 20; 26) having any cross-section in said joining plane (F), which workpieces are subjected to axial pressure,
**characterized in that**
vibration heads of more than one (n > 1) friction welding heads (I, II, III, IV) are stationarily arranged on at least one orbital disk (18) in at least one orbital plane about the workpieces to be welded (12; 14; 20; 26) in such a way that the virtual combined orbital friction axis, which is formed by superimposition of the more than one (n > 1) friction axes of the individual friction welding heads (I, II, III, IV) runs through the area of the mass centroid (22), and the more than one (n > 1) friction welding heads (I, II, III, IV) vibrate with the same friction frequency and the same amplitude as well as with a predeterminable phase position.

7. An orbital friction welding device in accord with claim 6,
**characterized in that**,
when using force control, all feed axes have, for the creation of surface symmetry in regard to the joining surface centroid (22), the same distance of their feed axes from the joining surface centroid (22) in the joining plane (F) and, simultaneously, are angularly symmetrically arranged, and
the mathematical product of the distance of the individual feed axis from the joining plane centroid (22) multiplied by the respective axial pressing force (P) is constant at the combined orbital friction axis for all feed axes.

8. An orbital friction welding device in accord with claim 6,
**characterized in that**
all feed axes have different distances from the joining plane centroid (22),
the axial pressing force (P) of the respective feed axis, when considering the angular positioning of the feed axes to one another, is inversely proportional to its distance from the joining plane centroid (22), and
the mathematical product of the distance of the individual feed axis from the joining plane centroid (22) multiplied by the respective axial pressing force (P) is constant at the combined orbital friction axis for all feed axes.

9. An orbital friction welding device in accord with any of claims 6 to 8,
**characterized in that**
on both sides of the joining plane (F), a plurality of friction welding heads (I, II, III, IV; I', II', III', IV') are stationarily arranged on an orbital disk (18, 16) mounted in the orbital plane about the workpieces to be welded (14, 12), and
all friction welding heads (I, II, III, IV; I', II', III', IV') located on the same orbital disk (18, 16) vibrate with the same frequency, the same amplitude and the same phase position.

10. An orbital friction welding device in accord with any of claims 6 to 8,
**characterized in that**
one of the workpieces (12, 14) to be welded end to end is stationarily affixed, and the more than one (n > 1) friction welding heads (I, II, III, IV) affixed to the orbital disk (18, 16) about the second workpiece set this into frictional vibration.

11. An orbital friction welding device in accord with any of claims 6 to 9,
**characterized in that**
more than one (n > 1) friction welding heads (I, II, III, IV; I', II', III', IV') are circularly affixed on both sides of the joining plane (F) of the workpieces (12, 14), which are to be welded end to end, wherein the more than one (n > 1) friction welding heads (I, II, III, IV; I', II', III', IV') on both sides of said joining plane (F) oppose each other with a vibration having an equal running phase or a counter running direction of rotation, respectively, with a continuously changing phase difference, and having a predetermined starting phase. (Linear relative movement)

12. An orbital friction welding device in accord with any of claims 6 to 9,
**characterized in that**
the more than one (n > 1) friction welding heads (I, II, III, IV), which are affixed on one side of the joining plane (F), vibrate with a counter running phase or an equal running direction of rotation, respectively, with a predetermined phase difference with reference to the more than one (n > 1) friction welding heads (I", II", III", IV") which are arranged on the other side of the joining plane (F). (Circular relative movement)

13. An orbital friction welding device in accord with claim 11 or claim 12,
**characterized in that**
the more than one (n > 1) friction welding heads (I, II, III, IV) which are affixed on one side of the joining plane (F) vibrate with a phase difference between 0° and 360° with reference to the more than one (n > 1) friction welding heads (I', II', III', III', IV'; I", II", III", IV", respectively), which are arranged on the other side of the joining plane.

14. An orbital friction welding device in accord with any of claims 8 to 11,
**characterized in that**
a plurality of units of friction welding heads (I, II, III, IV) on orbital disks, which disks are disposed radially and/or axially behind one another, are affixed about the circumference of the workpiece or the workpieces (12; 14; 20; 26) in order to increase the vibratory energy to be introduced into the joining plane (F).

15. An orbital friction welding device in accord with any of claims 6 to 14,
**characterized in that**
the more than one (n > 1) friction welding heads (I, II, III, IV; I', II', III', IV') are positionable with a vehicle, said friction welding heads being stationarily mounted, respectively, to orbital disks (24, 25) about the workpieces (12; 14; 20; 26), or the workpieces (12; 14; 20; 26) can be moved by the stationarily orbitally arranged friction welding heads into the respective welding position and be fixed **in that** position.

16. An orbital friction welding device in accord with any of claims 6 to 15,
**characterized in that**
the orbital disks (18; 16; 24; 25), which are provided with the more than one (n > 1) friction welding heads (I, II, III, IV; I', II', III', IV') and connected to the workpieces (12; 14; 20; 26), for generating the pressure to be applied during the introduction of the vibratory energy into the joining plane (F), can be moved against one another under distance/time control with the aid of feed units, whereby the virtual combined feed axis runs through the joining surface centroid (22) of the workpieces (12; 14; 20; 26).

17. An orbital friction welding device in accord with claim 16,
**characterized in that**
the feed units engage with the orbital disks (18; 16; 24; 25) which are arranged on both sides of the joining plane (F) and are affixed to the workpieces.

18. An orbital friction welding device in accord with claims 16 and 17,
**characterized in that**
the feed units comprise hydraulic or pneumatic drives or mechanical and/or electromechanical drives, respectively.

19. An orbital friction welding device in accord with any of claims 6 to 17, with more than one (n > 1) friction welding heads (I, II, III, IV) for welding workpieces (12; 14; 20; 26) with any cross-section in the joining plane (F), wherein circular movement energy provided by the friction welding heads (I, II, III, IV) can be introduced perpendicularly into the joining plane (F), the workpieces being subjected to axial pressure,
**characterized in that**
said workpieces (12; 14; 20; 26) stand upon one another at an angle or in a T-shape, respectively, and consist of a pipe branch leading away from a longitudinal pipe or a structural bar extending from a transverse beam,
a plurality of (n) friction welding heads (I', II', III', IV') are stationarily mounted to the longitudinal pipe or the transverse beam, respectively, in a longitudinal axis plane which extends perpendicular to the longitudinal axis of the pipe branch or the structural bar, respectively,
more than one (n > 1) friction welding heads (I, II, III, IV) are affixed in an orbital plane about the pipe branch or the structural bar, respectively,
the virtual combined orbital friction axis, which is formed by superimposition of the vibrations of the plurality of (n) frictional axes of the individual friction welding heads (I', II', III', IV'), runs through the area of the mass centroid, and
the friction welding heads (I, II, III, IV, I', II', III', IV') on both sides of the joining plane (F) vibrate with the same friction frequency, wherein the friction welding heads (I, II, III, IV) on the one side of the joining plane vibrate with a counter running phase and a predetermined phase difference relative to those friction welding heads (I', II', III', IV') arranged on the other side of said joining plane in such a way that a linear relative movement between the workpieces (12; 14; 20; 26) is caused in the joining plane (F).

20. An orbital friction welding device in accord with any of claims 6 to 18,
**characterized in that**
the device is used for welding workpieces (12; 14; 20; 26) having a substantially greater length than their transverse width (L >> D).

21. An orbital friction welding device in accord with any of claims 6 to 18,
**characterized in that**
the device is used in for welding workpieces (12; 14; 20; 26) having a substantially greater transverse width than their length (D >> L).

22. An orbital friction welding device in accord with any of claims 6 to 18,
**characterized in that**
the device is used for welding workpieces made of composite materials, wherein the feed is distance/time controlled.

## Revendications

1. Procédé de soudage par friction pour souder des pièces (12, 14, 20, 26), où les pièces sont pressées l'une contre l'autre pendant l'introduction de l'énergie d'oscillation dans le plan de contact (F),
**caractérisé en ce**
**qu'**au moins à un côté du plan de contact (F) n> 1 têtes de soudage par friction (I, II, III, IV) sont montées à au moins un disque orbital (18 ; 21) dans un plan orbital dans le domaine des pièces (12, 14, 20, 26) de sorte que les têtes d'oscillation des têtes de soudage par friction (I, II, III, IV) sont liées de manière stationnaire avec le disque orbital (18 ; 21), et
**que** les n> 1 têtes de soudage (I ; II, III, IV) faisant face à un côté respectivement, sont mises en oscillation avec une même fréquence de friction et une même amplitude ainsi qu'une même position de phase prédéterminée.

2. Procédé de soudage par friction orbital selon la revendication 1,
**caractérisé en ce**
**que** l'avance ou la pression de contact des n> 1 têtes de soudage par friction (I, II, III, IV) nécessaires pour l'introduction d'énergie se produit sur n> 1 axes d'avance de sorte que l'axe de poussée total virtuel résultant par superposition passe par le domaine du centre de gravité des surfaces de contact (22).

3. Procédé de soudage par friction orbital selon la revendication 1,
**caractérisé en ce**
**que** les n> 1 têtes de soudage par friction (I, II, III, IV) sont montées de sorte que les axe de friction dans leur somme avec leur axe de friction total virtuel passe à travers le domaine du centre de gravité des masses de toutes les masses oscillantes.

4. Procédé de soudage par friction orbital selon l'une des revendications 1 à 3,
**caractérisé en ce**
**que** les têtes d'oscillations des n>1 têtes de soudages par friction (I, II, III, IV) sont montées de manière stationnaire aux disques orbitaux (18, 16) sur les deux côtés du plan de contact (F) respectivement et
**que** les n> 1 têtes de soudage par friction (I, II, III, IV) d'un côté du plan de contact (F) sont mises en oscillation avec une position de phase prédéterminée par rapport aux n> 1 têtes de soudage par friction (I', II', III', IV') de l'autre côté du plan de contact (F).

5. Procédé de soudage par friction orbital selon l'une ou plusieurs des revendications 1 à 4,
**caractérisé en ce**
**que** la pression, avec laquelle les pièces sont pressées l'une contre l'autre dans le plan de contact (F) est générée en ce que l'agrégat d'avance rallie les pièces en direction axiale de manière commandée en temps et distance.

6. Dispositif de soudage par friction orbital pour réalisation du procédé selon l'une ou plusieurs des revendications 1 à 5, où une énergie cinétique circulaire peut être introduite pour souder les pièces (12 ; 14 ; 20 ; 26) ayant une coupe transversale au choix dans le plan de contact (F), lesquelles pièces de contact sont sujettes pression d'axe
**caractérisé en ce**
**que** les têtes d'oscillation de n> 1 têtes de soudage (I, II, III ; IV) sont montées de manière stationnaire à au moins un disque orbital (18) dans au moins un plan orbital autour des pièces (12 ; 14 ; 20 ; 26) à souder de sorte que l'axe de friction orbital total virtuel résultant de la superposition des n> 1 axes de friction des têtes de soudage par friction (I ; II, III, IV) individuelles passe par le domaine du centre de gravité des masses (22) et que les n> 1 têtes de soudage par friction (I, II, III, IV) oscillent avec une même fréquence de friction et même amplitude ainsi qu'une position de phase prédéterminée.

7. Dispositif de soudage par friction orbital selon la revendication 6,
**caractérisé en ce**
**que** lors de la commande de force tous les axes d'avance pour production de la symétrie de surface relativement au centre de gravité des surfaces de contact (22) ont une même distance de leurs axes d'avance depuis le centre de gravité de surface de contact (22) dans le plan de contact (F) et en même temps sont agencés angulairement de manière symétrique et
**que** le produit de la distance des axes d'avance individuels depuis le centre de gravité des surfaces de contacts (22) et de la force de pression axiale (P) respective est constant dans l'axe de friction orbital total pour tous les axes d'avance.

8. Dispositif de soudage par friction orbital selon la revendication 6,
**caractérisé en ce**
**que** tous les axes d'avance ont des distance différentes du centre de gravité des surfaces de contact (22),
**que** la force de pression axiale (P) des axes d'avance respectifs compte tenu de la position d'angle des axes d'avance l'un avec l'autre, est inversement proportionnelle à sa distance du centre de gravité des surfaces de contacts (22), et
**que** le produit de la distance des axes d'avance individuels depuis le centre de gravité des surfaces de contacts (22) et de la force de pression axiale (P) respective est constant dans l'axe de friction orbital total pour tous les axes d'avance.

9. Dispositif de soudage par friction orbital selon l'une ou plusieurs des revendications 6 à 8,
**caractérisé en ce**
**que** des deux côtés du plan de contact (F) une pluralité de tête de soudage par friction (I, II, III, IV ; I', II', III' ; IV') sont montées de manière stationnaire à un disque orbital (18, 16) monté dans le plan orbital autour des pièces (14, 12) à souder, et
**que** toutes les têtes de soudage par friction (I, II ; III, IV ; I', II', III', IV') montées au même disque orbital (18, 16) oscillent avec la même fréquence, la même amplitude et la même position de phase.

10. Dispositif de soudage par friction orbital selon l'une ou plusieurs des revendications 6 à 8,
**caractérisé en ce**
**qu'**une des pièces (12, 14) à souder est fixée de manière orbitale, et
**que** les n>1 têtes de soudage par friction (I, II, III, IV) fixées au disque orbital autour de l'autre pièce (14, 12) la font osciller par friction.

11. Dispositif de soudage par friction orbital selon l'une ou plusieurs des revendications 6 à 9,
**caractérisé en ce**
**que** n> 1 têtes de soudage par friction (I, II, III ; IV ; I', II', III', IV') rotatives sont fixées des deux côtés du plan de contact (F) des pièces (12, 14) à souder extrémité à extrémité, où les n> 1 têtes de soudage par friction (I, II, III, IV ; I', II', III', IV') des deux côtés du plan de contact (F) se font face avec une oscillation avec une phase synchronisée ou sens de rotation asynchronisé et avec une différence de phase changeant continuellement lors d'une phase de démarrage prédéterminée. (déplacement relatif linéaire)

12. Dispositif de soudage par friction orbital selon l'une ou plusieurs des revendications 6 à 9,
**caractérisé en ce**
**que** les n> 1 têtes de soudage par friction (I, II, III, IV) fixées sur un côté du plan de contact (F) oscillent avec une phase asynchrone ou sens de rotation synchronisé avec une différence de phase prédéterminée (déplacement relatif circulaire) relativement aux n> 1 têtes de soudage par friction (I', II' ; III', IV') montées de l'autre côté du plan de contact (F).

13. Dispositif de soudage par friction orbital selon l'une des revendications 11 ou 12,
**caractérisé en ce**
**que** les n> 1 têtes de soudage par friction (I, II, III, IV) fixées à un côté du plan de contact (F) oscillent avec une différence de phase entre 0° et 360° relativement aux n> 1 têtes de soudage par friction (I', II', III', IV' ou I", II", III", IV") montées de l'autre côté du plan de contact (F).

14. Dispositif de soudage par friction orbital selon l'une ou plusieurs des revendications 8 à 11,
**caractérisé en ce**
**que** pour l'augmentation de l'énergie d'oscillation à introduire dans le plan de contact (F), plusieurs agrégats de têtes de soudage par friction (I, II, III, IV) sont fixés sur des disques orbitaux montés l'un derrière l'autre de manière radiale et/ou axiale autour du diamètre de la pièce ou des pièces (12 ; 14 ; 20 ; 26).

15. Dispositif de soudage par friction orbital selon l'une ou plusieurs des revendications 6 à 14,
**caractérisé en ce**
**que** les n> 1 têtes de soudages par friction (I, II, III, IV ; I', II', III', IV') sont positionnables avec un véhicule, et montées de manière stationnaire à des disques orbitaux (24, 25) respectifs autour des pièces (12 ; 14 ; 20 ; 26) ou que les pièces (12 ; 14 ; 20 ; 26) sont déplaçables par les têtes de soudage par friction montées de manière orbitale stationnaire dans les positions de soudure respectives et là fixables de manière stationnaire.

16. Dispositif de soudage par friction orbital selon l'une ou plusieurs des revendications 6 à 15,
**caractérisé en ce**
**que** les disques orbitaux (18 ; 16 ; 24 ; 25) liés aux pièces (12 ; 14 ; 20 ; 26) et munis des n> 1 têtes de soudage par friction (I, II, III, IV ; I', II', III' ; IV') pour génération de la pression à introduire pendant l'introduction de l'énergie d'oscillation dans le plan de contact (F) sont déplaçables l'un contre l'autre de manière commandée en temps et distance à l'aide d'agrégats d'avance, où ainsi l'axe de poussée total passe par le centre de gravité de surfaces de contact (22) des pièces (12 ; 14 ; 20 ; 26).

17. Dispositif de soudage par friction orbital selon la revendication 16
**caractérisé en ce**
**que** les agrégats d'avance attaquent aux disques orbitaux (18 ; 16 ; 24 ; 25) montés des deux côtés du plan de contact (F) et liés de manière fixe avec les pièces (12 ; 14 ; 20 ; 26).

18. Dispositif de soudage par friction orbital selon les revendication 16 et 17
**caractérisé en ce**
**que** les agrégats d'avance sont constitués de mécanismes d'entraînement hydrauliques ou pneumatiques ou de mécanismes d'entraînement mécaniques et/ou électromécaniques.

19. Dispositif de soudage par friction orbital selon l'une ou plusieurs des revendications 6 à 17 avec n> 1 têtes de soudage par friction (I, II, III, IV) pour souder des pièces (12 ; 14 ; 20 ; 26) avec une coupe transversale au choix dans le plan de contact (F), où une énergie cinétique fournie par les têtes de soudage par friction (I, II, III ; IV), peut être introduite verticalement dans le plan de contact (F), les pièces (12 ; 14; 20 ; 26) étant sous pression d'axe,
**caractérisé en ce**
**que** les pièces (12 ; 14 ; 20 ; 26) sont l'une sur l'autre de manière angulaire ou en forme de T et sont composés d'une pièce d'embranchement de tuyau partant d'un tuyau longitudinal ou d'une jambe partant d'une traverse,
**qu'**avec le tuyau longitudinal ou la traverse respectivement, n têtes de soudage par friction (I', II', III', IV') sont liées de manière stationnaire, dans un plan axial longitudinal passant verticalement par rapport à un axe longitudinal de la pièce d'embranchement du tuyau ou de la jambe,
**que** n>1 têtes de soudage par friction (I, II, III, IV) sont fixées dans un plan orbital autour le la pièce d'embranchement de tuyau ou de jambe.
**que** l'axe de friction orbital total virtuel résultant d'une superposition des oscillations des n axes de frictions des têtes de soudage par friction (I', II', II', IV') individuelles passe par le domaine du centre de gravité des masses, et
**que** les têtes de soudage par friction (I, II, III, IV ; I', II' ; III' ; IV') des deux côtés du plan de contact (F) oscillent avec une même fréquence où les têtes de soudage par friction (I, II ; II ; IV) montées sur un côté du plan de contact oscillent avec phase asynchrone et une différence de phase prédéterminée relativement aux têtes de soudage par friction (I', II' , III', IV') montées de l'autre côté du plan de contact de sorte qu'un déplacement relatif linéaire entre les pièces (12 ; 14 ; 20 ; 26) se produit dans le plan de contact (F).

20. Dispositif de soudage par friction orbital selon l'une ou plusieurs des revendications 6 à 18
**caractérisé en ce**
**qu'**il trouve application pour soudage de pièces (12 ; 14 ; 20 ; 26), dont la longueur en substance est plus grande que leur étendue transversale (L>>D).

21. Dispositif de soudage par friction orbital selon l'une ou plusieurs des revendications 6 à 18
**caractérisé en ce**
**qu'**il trouve application pour soudage de pièces (12 ; 14 ; 20 ; 26), dont l'étendue transversale en substance est plus grande que l'étendue longitudinale (D>>L).

22. Dispositif de soudage par friction orbital selon l'une ou plusieurs des revendications 6 à 18
**caractérisé en ce**
**qu'**il trouve application pour soudage de pièces, où l'avance se produit de manière commandée en temps et distance.
